# EUROPEAN PATENT APPLICATION

(11) **EP 4 607 909 A1**
(43) Date of publication of application: **27.08.2025**
(21) Application number: 23879115.6
(22) Date of filing: 17.10.2023
(51) Int. Cl.: H04N 5/262

(54) **IMAGE PROCESSING METHOD AND APPARATUS, ELECTRONIC DEVICE AND STORAGE MEDIUM**

(30) Priority: 19.10.2022 CN 202211281053
(71) Applicant: DOUYIN VISION CO., LTD., Beijing 100041 (CN)
(72) Inventor: ZHANG, Haiyang, Beijing 100028 (CN)
(74) Representative: Marks & Clerk LLP
(86) International application number: PCT/CN2023/125000
(87) International publication number: WO 2024/083127

(57) **Abstract**

An image processing method, an apparatus, an electronic device, and a storage medium are provided, wherein the method includes: in response to detecting that an image processing condition is satisfied, displaying (S110) a captured image on a main interface; and displaying (S120) at least one effect thumbnail on an effect display interface different from the main interface, wherein each effect thumbnail includes an effect icon and an effect cover corresponding to the effect icon.

## Description

### CROSS-REFERENCE TO RELATED APPLICATION(S)

This application claims priority to Chinese Application No. 202211281053.6, filed with the Chinese Patent Office on October 19, 2022, the disclosure of which is incorporated herein by reference in its entity.

### FIELD

Embodiments of the present disclosure relate to an image processing technology, for example, to an image processing method, an apparatus, an electronic device and a storage medium.

### BACKGROUND

With the development of network technology, more and more applications have entered the lives of users, especially a series of software that can shoot short videos, which are deeply loved by users.

### SUMMARY

The present disclosure provides an image processing method, an apparatus, an electronic device, and a storage medium.

In a first aspect, an embodiment of the present disclosure provide an image processing method, which includes:
in response to detecting that an image processing condition is satisfied, displaying a captured image on a main interface; and,
displaying at least one effect thumbnail on an effect display interface different from the main interface,
wherein each effect thumbnail includes an effect icon and an effect cover corresponding to the effect icon.

In the second aspect, an embodiment of the present disclosure also provides an image processing apparatus, which includes:
a captured image display module, configured to display the captured image on the main interface in response to detecting that an image processing condition is satisfied; and,
an effect thumbnail display module, configured to display at least one effect thumbnail on an effect display interface different from the main interface,
wherein each effect thumbnail includes an effect icon and an effect cover corresponding to the effect icon.

In a third aspect, an embodiment of the present disclosure also provides an electronic device, which includes:
one or more processors;
a storage device, configured to store one or more programs,
wherein when the one or more programs are executed by the one or more processors, one or more processors are caused to implement the image processing method of any of embodiments of the present disclosure.

In a fourth aspect, an embodiment of the present disclosure also provides a storage medium containing computer executable instructions, which, when executed by a computer processor, are used to execute the image processing method of any of embodiments of the present disclosure.

### BRIEF DESCRIPTION OF THE DRAWINGS

Throughout the drawings, the same or similar reference numerals represent the same or similar elements. It should be understood that the drawings are schematic, and components and elements are not necessarily drawn to scale.
FIG. 1 is a schematic flowchart of an image processing method provided by an embodiment of the present disclosure.
FIG. 2 is a user display interface of an image processing application program provided by an embodiment of the present disclosure.
FIG. 3 is a schematic diagram of an effect display interface provided by an embodiment of the present disclosure.
FIG. 4 is a schematic diagram of an effect thumbnail provided by an embodiment of the present disclosure.
FIG. 5 is a schematic flowchart of an image processing method provided by an embodiment of the present disclosure.
FIG. 6 is a schematic flowchart of an image processing method provided by an embodiment of the present disclosure.
FIG. 7 is a schematic flowchart of an image processing method provided by an embodiment of the present disclosure.
FIG. 8 is a schematic diagram of a preview window display position provided by an embodiment of the present disclosure.
FIG. 9 is a schematic diagram of a preview window display position provided by an embodiment of the present disclosure.
FIG. 10 is a schematic diagram of a preview window display position provided by an embodiment of the present disclosure.
FIG. 11 is a schematic diagram of a preview window display position provided by an embodiment of the present disclosure.
FIG. 12 is a schematic diagram of a zoomed-in preview window provided by an embodiment of the present disclosure.
FIG. 13 is a schematic diagram of a zoomed-out preview window provided by an embodiment of the present disclosure.
FIG. 14 is a schematic diagram of returning to a default interface provided by an embodiment of the present disclosure.
FIG. 15 is a schematic diagram of a structure of an image processing apparatus provided by an embodiment of the present disclosure.
FIG. 16 is a schematic diagram of a structure of an electronic device provided by an embodiment of the present disclosure.

### DETAILED DESCRIPTION OF EMBODIMENTS

Software developers can add a variety of effect props to the application for users to use in the process of shooting videos. However, these effects are usually presented in the user's sight in the form of a single icon, providing little information, and users cannot intuitively browse the display effect of the effect.

To deal with the above situation, embodiments of the present disclosure provide an image processing method, an apparatus, an electronic device, and a storage medium.

Embodiments of the present disclosure will be described below with reference to the accompanying drawings. Although certain embodiments of the present disclosure are shown in the accompanying drawings, it should be understood that the present disclosure can be implemented in various forms and should not be interpreted as being limited to the embodiments described herein. On the contrary, these embodiments are provided to give a more thorough and complete understanding of the present disclosure. It should be understood that the drawings and embodiments of the present disclosure are only for exemplary purposes and are not intended to limit the scope of protection of the present disclosure.

It should be understood that the various steps recited in the method implementation of the present disclosure can be executed in different orders and/or in parallel. In addition, the method implementation may include additional steps and/or omit the steps shown. The scope of the present disclosure is not limited in this respect.

The term "including" and its variations used herein are open inclusions, that is, "including but not limited to". The term "based on" is " at least partially based on". The term "one embodiment" means "at least one embodiment"; the term "another embodiment" means "at least one other embodiment"; and the term "some embodiments" means "at least some embodiments". The relevant definitions of other terms will be given in the following description.

It should be noted that the concepts of "first" and "second" mentioned in this disclosure are only used to distinguish different apparatus, modules or units, and are not used to limit the order or interdependence of the functions performed by these apparatus, modules or units.

It should be noted that the modifications of "one" and "more" mentioned in this disclosure are illustrative rather than restrictive. Those skilled in the art should understand that unless otherwise clearly stated in the context, they should be understood as "one or more".

The names of the messages or information exchanged between multiple apparatus in implementations of the present disclosure are only for illustrative purposes, and are not used to limit the scope of these messages or information.

It can be understood that before using each embodiment of the present disclosure, the type, scope of use, usage scenarios, etc., of the personal information involved in the present disclosure should be informed to the user in an appropriate manner in accordance with relevant laws and regulations and the user's authorization should be obtained.

For example, in response to receiving an active request from a user, a prompt message is sent to the user to clearly prompt the user that the operation requested to be performed will require obtaining and using the user's personal information. Thus, the user can autonomously choose, according to the prompt message, whether to provide personal information to software or hardware such as an electronic device, an application program, a server or a storage medium that performs the operation of embodiments of the present disclosure.

As an optional but non-limiting implementation, in response to receiving an active request from a user, the method of sending a prompt message to the user may be, for example, a pop-up window, in which the prompt message may be presented in text. In addition, the pop-up window may also carry a selection control for the user to choose "agree" or "disagree" to provide personal information to the electronic device.

It can be understood that the above notification and the process of obtaining user authorization are only illustrative and do not constitute a limitation on the implementation of the present disclosure. Other methods that satisfy relevant laws and regulations may also be applied to the implementation of the present disclosure.

It may be understood that the data involved in the present embodiment (including but not limited to the data itself, the acquisition or use of the data) shall comply with the requirements of relevant laws and regulations and relevant provisions.

Before introducing the present embodiment, an exemplary illustration of the application scenario can be given. An embodiment of the present disclosure can be applied to any scene that requires effect display or effect processing. For example, if it is applied in the process of video shooting, the object being shot can be processed with an effect to obtain a target effect image for display, it can also be applied to the process of static image shooting, for example, after shooting an image with a camera built into a terminal device, the shot image is processed into effect image for effect display. In the present embodiment, the added effect can be makeup, video, and dynamic patterns. In the present embodiment, the target object can be a user, or various animals or landscape images captured.

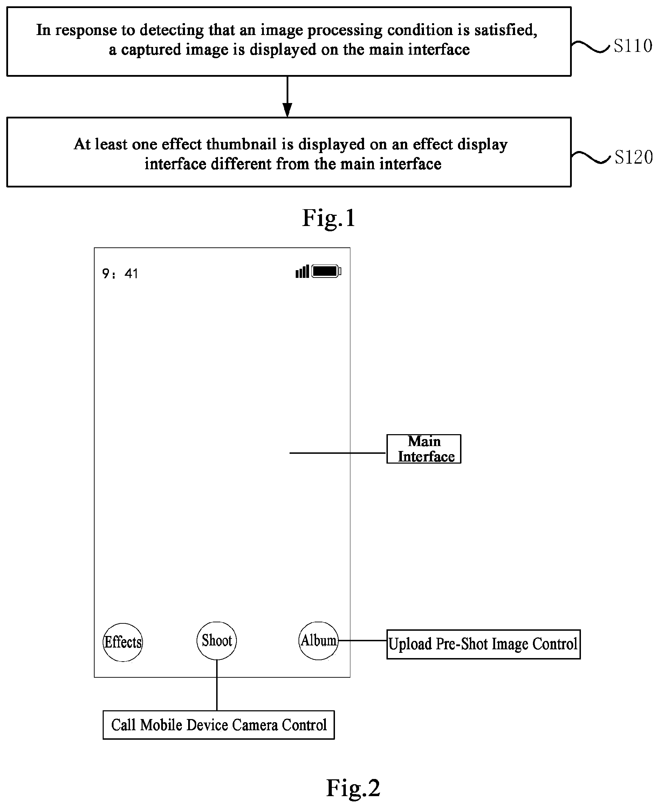

FIG. 1 is a schematic flowchart of an image processing method provided by an embodiment of the present disclosure. An embodiment of the present disclosure can enrich the effect thumbnails corresponding to each effect prop on the effect display interface, so that the user can intuitively understand the effect corresponding to each effect prop. The method can be executed by an image processing apparatus, which can be implemented in a form of software and/or hardware, and optionally, by an electronic apparatus, which can be a mobile terminal, a personal computer (PC) or a server. An embodiment of the present disclosure can be executed by a server, or by a client, or by a client and a server.

As shown in FIG. 1, the method includes following operations.

At S110, in response to detecting that an image processing condition is satisfied, the captured image is displayed on the main interface.

Herein, the apparatus for executing the method for generating effect video provided by an embodiment of the present disclosure can be integrated in an application software supporting the effect video processing function, and the software can be installed in an electronic device. Optionally, the electronic device can be a mobile terminal or a PC. The application software can be a type of software for image/video processing, and its specific application software will not be described one by one here, as long as the image/video processing can be realized. It can also be a specially developed application program to realize adding effects and displaying the effects in a software, or to be integrated in the corresponding page, and the user can realize the processing of effect video through the page integrated in the PC.

In the present embodiment, in an application software or an application program supporting the effect video processing function, a control for triggering the selection of application effects can be pre-developed, and when it is detected that the user triggers the control, the triggering operation of selecting the application effect can be responded to, thereby entering the display interface, which is the main interface. The captured image is image to which the user will add effects. The captured image may include an image obtained in two following ways. On one hand, the captured image may be a real-time shot image, and when the user triggers a camera control of a camera apparatus, the camera apparatus integrated in the mobile terminal is called at this time, an image corresponding to the environment is shot through the camera apparatus, and the image generated at this time is the image to be processed. On the other hand, the captured image may be a pre-shot image. The pre-shot image is transmitted to a display page of the main interface through an image upload entrance of the application program as the image to be processed.

For example, when the user triggers an application software or an application program that supports effect video processing function on the mobile terminal device, a user display interface of the image processing application program is first entered. A control that can call the camera apparatus of the mobile device is preset on the user display interface, and a control for uploading the pre-shot image is provided on the user display interface. When the user triggers a control for calling the camera apparatus of the mobile device, the mobile terminal device senses that it needs to start the camera apparatus to shoot, and then can display the image corresponding to the current environment on the main interface, and use the image captured and displayed on the display interface as the image to be processed, or, when a user triggers a control for uploading the pre-shot image, the user can enter an album of the mobile terminal device, find and select a captured image from the album, and display the selected pre-shot image as the captured image on the main interface. It should be noted that the interface for displaying the captured image is used as the main interface.

Exemplarily, referring FIG. 2, when the user triggers the application software or application program, the user display interface of the image processing application program is entered. As shown in FIG. 2, the control at the bottom middle of the display interface is a control for calling the camera apparatus of the mobile device. When the user triggers a control named "shooting", the mobile terminal device starts the camera apparatus to shoot, and displays the image corresponding to the current environment on the main interface; and the control at the bottom right of the display interface is a control for uploading the pre-shot image. When the user triggers a control named "album", it jumps to an album browsing interface, and can find and select a pre-shot image from the mobile device album, and display the selected pre-shot image as the captured image on the main interface.

At S120, at least one effect thumbnail is displayed on an effect display interface different from the main interface.

Herein, the effect thumbnail includes an effect icon and an effect cover corresponding to the effect icon.

In the present embodiment, the effect display interface is a pre-developed display interface for displaying various effect props. The effect display interface and the main interface are two different display interfaces. The effect display interface can be displayed on the main interface in a semi-occluded manner. The difference between the effect display interface and the main interface is that they are different controls and different display interfaces. The effect thumbnail is an effect display effect and a prop identification corresponding to each effect prop. The prop identification is used as an effect icon, and the effect display effect is used as an effect cover. The effect icon can be an identifying identification that represents the effect prop, and optionally, the identification can be an icon. The effect cover can be a video shot by a user using the effect corresponding to the effect icon, or a video shot by a celebrity or internet celebrity using the effect corresponding to the effect icon.

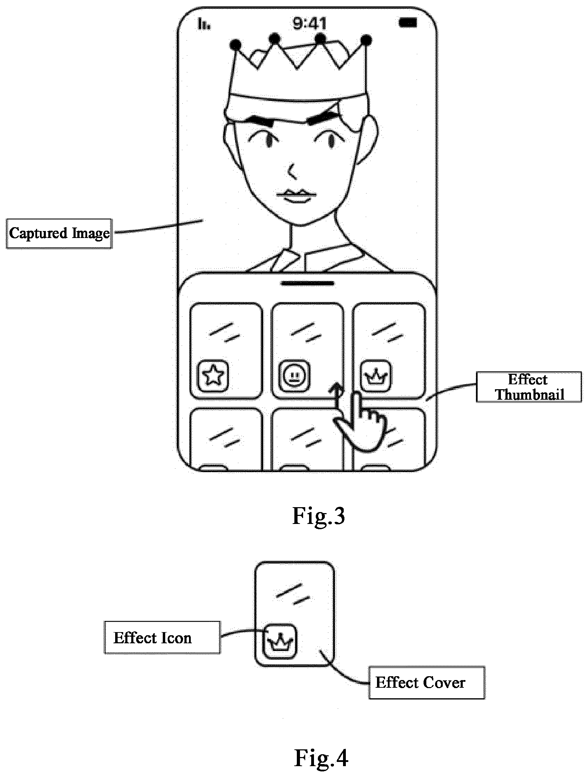

For example, when the user triggers the control for "shooting", the captured image captured by the image acquisition apparatus can be displayed on the main interface, and at least one effect thumbnail can be displayed on the effect display interface that is half-covered on the main interface. In order to clearly introduce the effect display interface, taking an example for introducing and referring to FIG. 3, the captured image is displayed on the main interface, the effect thumbnail is located on the effect display interface, and the effect display interface is half-covered on the main interface. When the effect display interface covers different regions, there are certain differences in the contents displayed by the image to be processed, but the captured image must cover the entire main interface. In order to display as many effect thumbnails as possible on the effect display interface, multiple effect thumbnails can be displayed on the effect display interface in a sequence from left to right and from top to bottom. For example, on the effect display interface, three effect thumbnails are displayed in a row, and then multiple rows of effect thumbnails can be displayed. Herein, the effect thumbnail includes an effect icon and an effect cover. In order to clearly introduce the effect thumbnail, taking an example for introducing and referring to FIG. 4, the effect icon can be a "crown" identification, and the effect cover which is the "crown" identification corresponds to a video shot with an effect prop. The effect icon can be located anywhere on the effect cover, optionally, in the upper left corner, upper right corner, lower left corner or lower right corner.

In an embodiment of the present disclosure, when it is detected that an image processing condition is satisfied, the captured image is displayed on the main interface; and at least one effect thumbnail is displayed on the effect display interface different from the main interface; wherein the effect thumbnail includes an effect icon and an effect cover corresponding to the effect icon, which improves a situation that the user cannot intuitively browse the display effect of the effect in the related art, and the cost of the user understanding the effect is high. By optimizing the contents on the effect thumbnail, the amount of information displayed is increased, and the user's understanding of the effect contents is improved.

A more intuitive effect display method is provided for users who select effect operations, which reduces the user's understanding cost of effects and is beneficial for efficient interaction between users and the effect display interface.

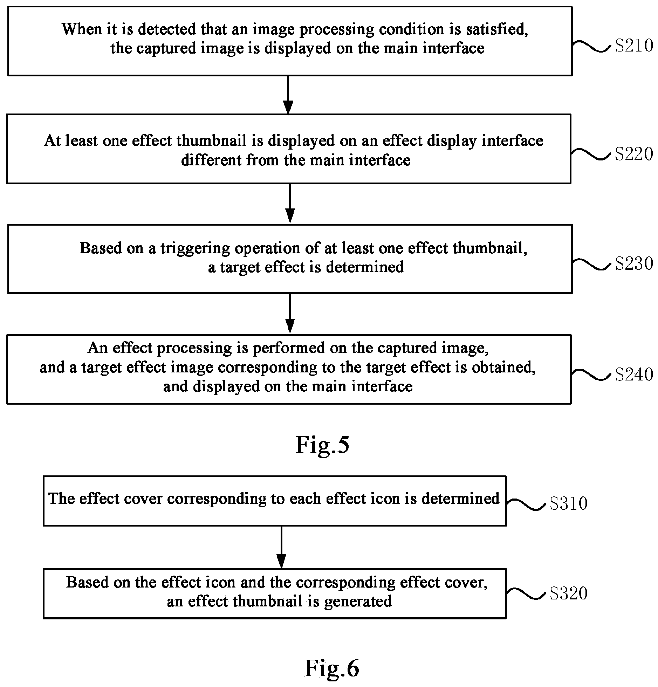

FIG. 5 is a schematic flowchart of an image processing method provided by an embodiment of the present disclosure. On the basis of the above-mentioned embodiment, after displaying at least one effect thumbnail on the effect display interface of the main interface, a target effect thumbnail can be determined and applied to the image to be processed. The implementation thereof can be referred to as the present embodiment. Herein, the technical terms that are the same as or corresponding to the above-mentioned embodiment are not repeated here.

As shown in FIG5, the method includes following operations.

At S210, when it is detected that an image processing condition is satisfied, the captured image is displayed on the main interface.

At S220, at least one effect thumbnail is displayed on an effect display interface different from the main interface.

At S230, based on a triggering operation of at least one effect thumbnail, a target effect is determined.

In the present embodiment, the target effect is an effect that the user wants to select and is added to the image to be processed. When the user triggers an application software or an application program, a user display interface of the image processing application program is entered as shown in FIG2. The control located at the lower left of the display interface is the effect display control. When the "effect" control is triggered, as shown in FIG2, the main interface simultaneously displays the captured image and the effect display interface. The effect display interface may include multiple effect thumbnails, which may be arranged in sequence from left to right and from top to bottom on the effect display interface. When effect props corresponding to an effect thumbnail need to be applied to the image to be processed, the effect thumbnail may be triggered. Although the target effect thumbnail is triggered at this time, the target effect thumbnail corresponds to a target effect. Therefore, when the target effect thumbnail is triggered, it can be determined which target effect is selected.

At S240, an effect processing is performed on the image to be processed, and a target effect image corresponding to the target effect is obtained, and displayed on the main interface.

Herein, the display effect of the target effect image corresponds to a display effect of the effect cover of the target effect.

In the present embodiment, the target effect image is the effect image corresponding to the effect prop, applied to the image to be processed, corresponding to the target effect. After obtaining the target effect image corresponding to the target effect, the target effect image is displayed on the main interface. The advantage of this setting is that whenever a target effect is determined, the effect is applied to the image to be processed, and the user can observe in real time whether the current effect is suitable for the current image to be processed.

Exemplarily, referring to Figure 3, when the user triggers the effect with the effect identification of "Crown", it means that this effect cover is the effect required to be achieved by the image to be processed. The effect triggered at this time can be used as the target effect, and it can be applied to the captured image to obtain the target effect image, which is further displayed on the main screen.

In an embodiment of the present disclosure, when it is detected that an image processing condition is satisfied, the captured image is displayed on the main interface; and at least one effect thumbnail is displayed on the effect display interface different from the main interface; based on the triggering operation of at least one effect thumbnail, the target effect is determined; the effect is processed on the image to be processed, and the target effect image corresponding to the target effect is obtained and displayed on the main interface, so that whenever a target effect is determined, the effect is applied to the image to be processed, and the user can observe in real time whether the current effect is suitable for the current image to be processed.

FIG. 6 is a schematic flowchart of an image processing method provided by an embodiment of the present disclosure. On the basis of the above-mentioned embodiment, before displaying at least one effect thumbnail on the effect display interface, it is necessary to determine the effect cover corresponding to each effect icon, so as to generate an effect thumbnail based on the effect icon and the effect cover. The implementation thereof can be referred to as the present embodiment. Herein, the technical terms that are the same or corresponding to the above-mentioned embodiment are not repeated here. As shown in FIG. 6, the method includes following operations.

At S310, the effect cover corresponding to each effect icon is determined.

Herein, the effect cover includes a static cover image or a dynamic cover image.

In an actual application process, when users perform an effect processing, the number of effect props is relatively large. In order to determine the effect corresponding to each effect, each effect prop needs to be triggered to determine its display effect, but the process is inefficient. Based on this, an embodiment proposed in the present disclosure predetermines the effect cover, which can be used to characterize the effect corresponding to the effect icon, so as to quickly understand the display effect of the effect applied to the image to be processed. In order to improve the richness and realism of the effect thumbnail display, the effect cover may include a static cover image or a dynamic cover image. Herein, the static cover image may be a certain frame image, and the dynamic cover image may be a splicing of multiple frames of images. The advantage of providing a dynamic image is that the effect is further displayed.

In an embodiment of the present disclosure, the method of determining the effect cover may include at least two methods. The first method is: determining the effect cover based on the user's trigger operation, thereby improving the effect of the user's interactivity with the display interface; the other method is: in a development stage, the background server dynamically updates the effect cover corresponding to each effect icon according to big data. Next, how to determine the effect cover in each determination method is described.

Method 1: Based on the effect creation video corresponding to the effect icon uploaded by the target user, the effect cover corresponding to the effect icon is determined.

It should be noted that the user can shoot an effect video based on each effect prop. After the user completes the shooting of the effect video, in order to mark the effect corresponding to each effect prop, an effect cover corresponding to each effect logo can be made. The advantage of such a setting is that the effect cover can be customized to satisfy the personalized needs of the user and the matching between the effect prop and the user.

In the present embodiment, the user can also upload the video he created to the application program as an effect cover, that is, the user makes the effect cover corresponding to the effect icon by himself. Exemplarily, assuming that the user uses a pre-shot image of the effect corresponding to an effect icon, the video contents shot by the user can be uploaded to the effect thumbnail of the application program as the effect cover of the effect thumbnail. The advantage of such a setting is that the cover effect can be generated by the effect video created by oneself, which improves the autonomy of the effect cover creation and the effect of the personalized needs of the user.

The second method of determining the effect cover may include:
for each effect icon, acquiring a historical effect video associated with a current effect icon and a corresponding effect attribute;
determining, based on the effect attribute, a target historical effect video from the historical effect video; and
determining, based on the target historical effect video, an effect cover of the current effect icon.

It should be noted that the effect cover corresponding to each effect graphic icon can be set in the development stage or in the process of applying each effect prop. There are two ways to understand the setting of the effect cover during the application process. The first understanding is: periodically updating the effect cover corresponding to each effect icon. If an implementation process for periodically updating its effect cover can be regularly obtaining the effect attributes of each effect prop, then the effect cover will be determined according to the effect attributes; or the characteristic attributes of each effect prop can be obtained in real time, and the effect cover is updated immediately according to the latest heat data. The second understanding is: according to the effect attributes of each effect video corresponding to each effect icon, updating the effect cover corresponding to the corresponding effect icon.

In the present embodiment, based on the data of the application platform, the effect videos shot by the users associated with the effects corresponding to each effect icon can be obtained, and these video contents can be called historical effect videos. The effect attribute can be the heat, popularity, exposure, and/or playback volume of the shot video. The target historical effect video can be the video contents with relatively high effect attributes selected from the historical effect videos.

For example, an effect icon corresponds to an effect prop. Based on the data of the application platform, the effect videos shot by the users associated with the effects corresponding to each effect icon can be obtained. According to the heat, popularity, exposure, or playback volume of the effect videos shot by the associated users, it can be clear which historical effect video is the most popular with the user, indicating that the user has a relatively high preference for this historical effect video, and this video can be used as the target historical effect video. The effect cover corresponding to the effect icon can be determined based on the target historical effect video. The advantage of this setting is that the user can preview the effect display effect according to the latest heat, without having to try the display effect of multiple effects many times, such that the user is more inclined to choose the effect corresponding to the effect icon for use.

Optionally, one or more video frames are determined from the target historical effect video as the effect cover of the current effect icon.

In the present embodiment, a video shot by other influential users using the effect corresponding to the effect icon is selected, and one or more frames of video contents can be selected as the effect cover according to the heat, popularity, exposure volume, and playback volume of the shot video, wherein if one video frame is selected, it corresponds to a static effect cover, and if multiple video frames are selected, they correspond to a dynamic effect cover. The advantage of this setting is that it provides more information, enriches the display effect of the effect cover, and the user can intuitively feel the effect of the effect.

At S320, based on the effect icon and the corresponding effect cover, an effect thumbnail is generated.

For example, the effect icon and the effect cover are combined as an effect thumbnail, wherein the effect icon is used to represent what the current effect is, and the effect cover is used to represent the display effect of the corresponding effect.

In an embodiment of the present disclosure, the effect cover corresponding to each effect icon is determined, wherein the effect cover includes a static cover image or a dynamic cover image. An effect thumbnail is generated based on the effect icon and the corresponding effect cover. In the present embodiment, when selecting an effect, the user does not need to try multiple effects multiple times. The user can know what the display effect will be if the effect corresponding to an effect thumbnail is triggered according to the effect thumbnail, thereby reducing the user's understanding cost of the effect.

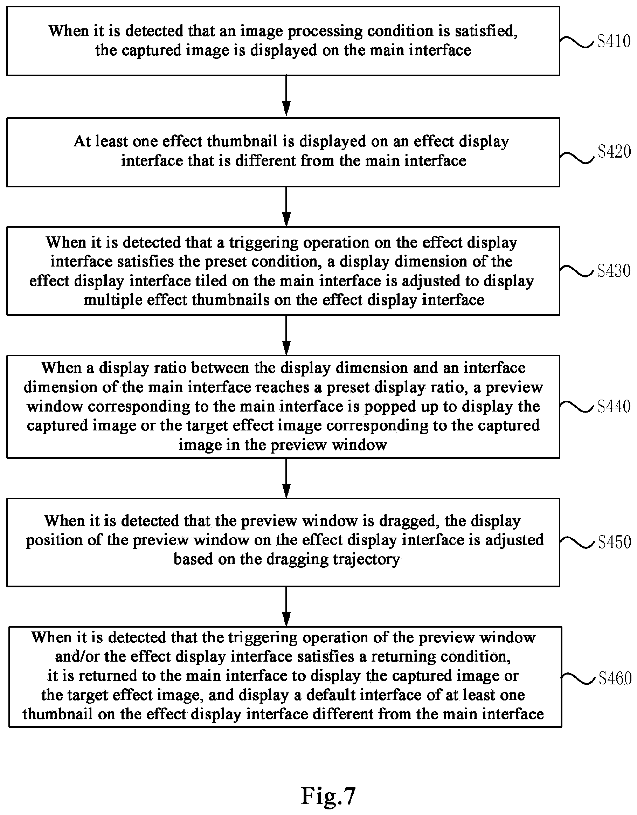

FIG. 7 is a schematic flowchart of an image processing method provided in an embodiment of the present disclosure. On the basis of the aforementioned embodiment, the display contents and display method on the effect display interface are further refined, and the implementation thereof can be referred to in the present embodiment. Herein, the technical terms that are the same as or corresponding to the above embodiments are not repeated here.

As shown in FIG. 7, the method includes following operations.

At S410, when it is detected that an image processing condition is satisfied, the captured image is displayed on the main interface.

At S420, at least one effect thumbnail is displayed on an effect display interface that is different from the main interface.

At S430, when it is detected that a triggering operation on the effect display interface satisfies the preset condition, the display dimension of the effect display interface tiled on the main interface is adjusted to display multiple effect thumbnails on the effect display interface.

In the present embodiment, the preset condition may be sliding the effect display interface upward, sliding the effect display interface downward, sliding the effect display interface to the left, and sliding the effect display interface to the left. The display dimension of the effect display interface on the main interface can be adjusted, for example, the display dimension of the effect display interface on the main interface can be increased, or the display dimension of the effect display interface on the main interface can be decreased. Exemplarily, referring to the figure, if the effect display interface is slid upward or to the right, the interface display dimension of the effect display interface is increased, and more effect thumbnails can be displayed at this time; if the effect display interface is slid downward or to the left, the interface display dimension of the effect display interface is reduced, and fewer effect thumbnails can be displayed at this time. The advantage of this setting is that in the process of selecting effects, users can display more effect thumbnails according to their own needs, which satisfies the personalized needs of users.

At S440, when a display ratio between the display dimension and an interface dimension of the main interface reaches a preset display ratio, a preview window corresponding to the main interface is popped up to display the captured image or the target effect image corresponding to the captured image in the preview window;

Herein, the window dimension of the preview window is smaller than the display dimension.

In the present embodiment, the preset display ratio is a preset ratio value, which refers to a display ratio between a display dimension of the effect display interface and an interface dimension of the main interface. Exemplarily, the preset display ratio can be 80% or 70%. The preview window is a small window with the same contents as the main interface, which can be suspended above the effect display interface display page.

In an actual application process, an area of the effect display interface can be adjusted. An interface of the effect display interface can be enlarged or reduced. When the interface of the effect display interface is enlarged to reach a preset display ratio of the display dimension to the interface dimension of the main interface, for example, when the coverage rate reaches 80% or 70%, it means that the contents of the main interface are not well displayed for the user. In order to clearly display the target effect image or the image to be processed, the display contents of the main interface can be displayed in a form of a preset window. The contents displayed in the preview window are the same as that displayed in the main interface. If the display image in the main page is an captured image that has not triggered the effect thumbnail, the image displayed in the preview window is the original captured image or the original uploaded image, that is, the captured image without an effect processing; and if the display image in the main page has triggered the captured image of the effect thumbnail, the image displayed in the preview window are the captured image after an effect processing. The advantage of this setting is that: on the basis of displaying more effect thumbnails, the display contents in the main interface can be effectively displayed.

At S450, when it is detected that the preview window is dragged, the display position of the preview window on the effect display interface is adjusted based on the dragging trajectory.

In the present embodiment, the dragging trajectory refers to a moving trajectory of the preview window on the display interface when the user drags the preview window. The preview window can be dragged in any direction. When the dragging stops, the position of the preview window in the display interface is a display position of the current preview window on the effect display interface, and the preview window can be displayed at any position on the main screen.

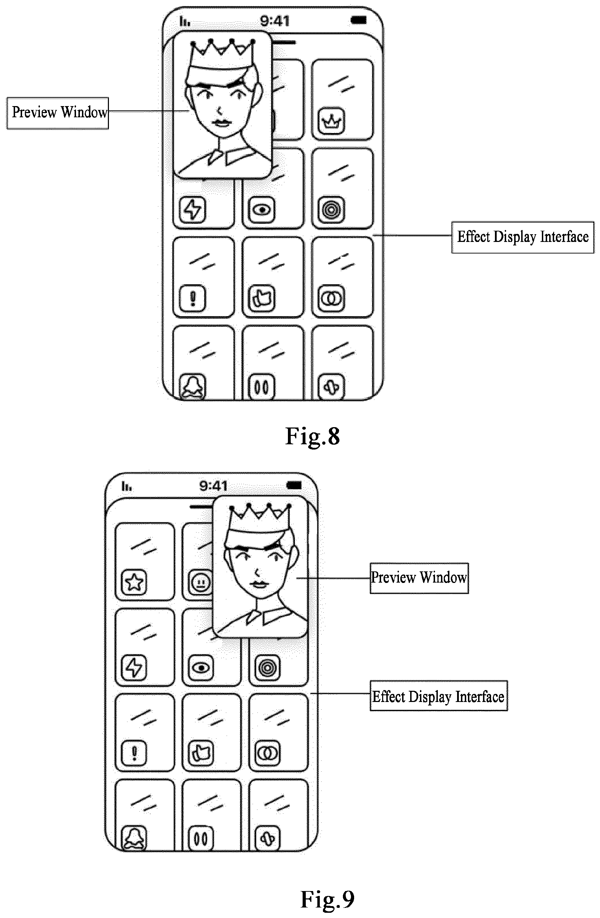

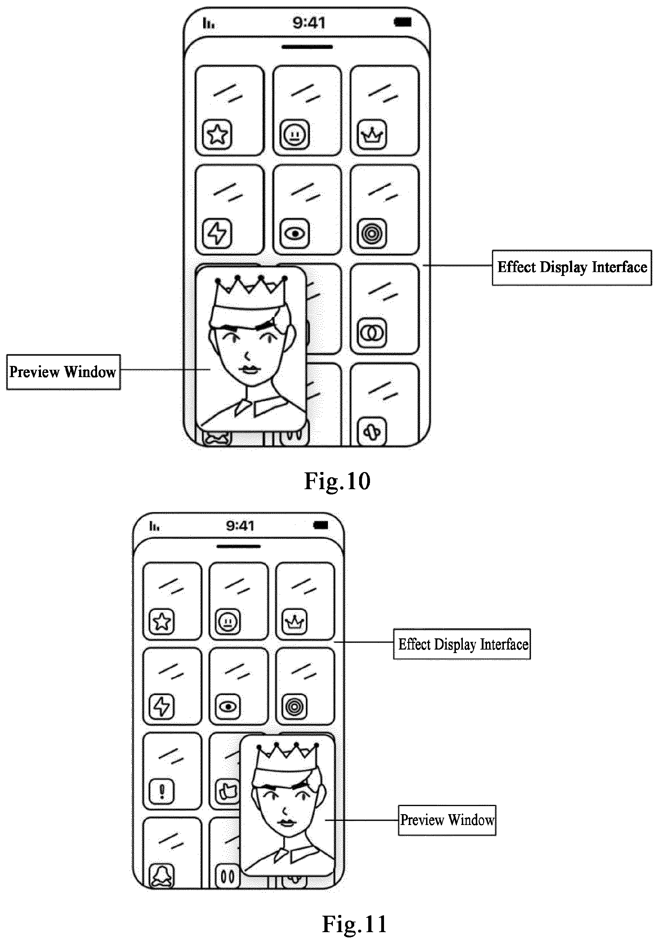

Exemplarily, referring to FIG. 8, the display position of the preview window on the effect display interface can be adjusted by dragging the preview window, and the display position of the preview window can be located in the upper left corner of the display interface. Referring to FIG. 9, the display position of the preview window can be located in the upper right corner of the display interface. Referring to FIG. 10, the display position of the preview window can be located in the lower left corner of the display interface. Referring to FIG. 11, the display position of the preview window can be located in the lower right corner of the display interface. The advantage of this setting is that when the user selects an effect, he can freely drag the display position of the preview window on the main screen according to his needs, display more effect thumbnails, and improve the adaptability of the application.

Optionally, when the operation of two-finger zoom in or two-finger zoom out is triggered in the preview window, the window dimension of the preview window on the effect display interface is adjusted.

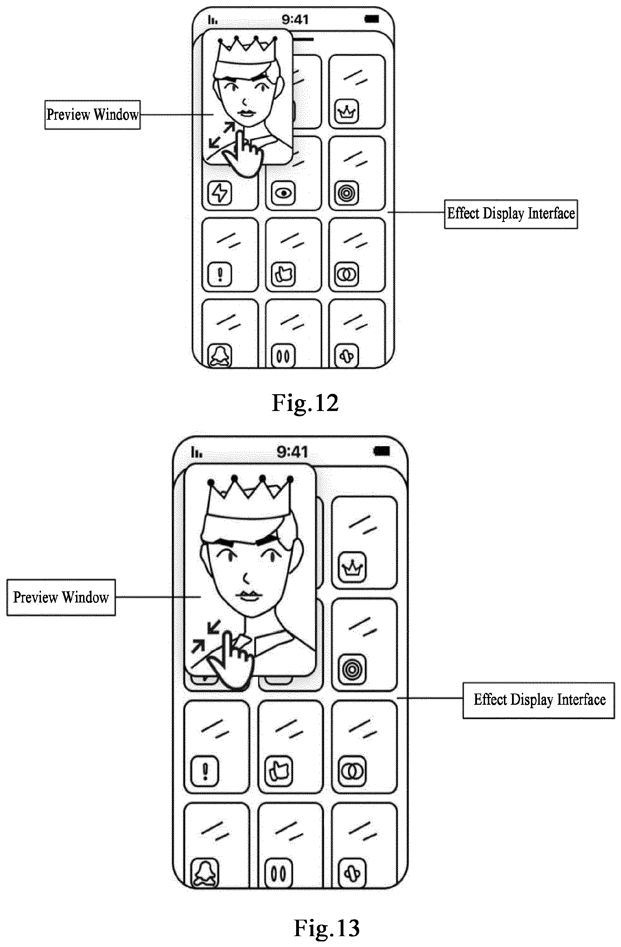

In the present embodiment, referring to FIG. 12, the size of the window dimension of the preview window on the effect display interface can be adaptively adjusted. When it is detected that two fingers are moving in a direction away from each other on the preview window, the dimension of the preview window is enlarged; and referring to FIG. 13, and when it is detected that two fingers are moving in a direction towards each other on the preview window, the size of the preview window is reduced. The advantage of this setting is that the user can adjust the display dimension of the preview window on the effect display interface according to their needs, and can display more effect thumbnails by reducing the preview window, or display a larger dimension of the captured image by enlarging the preview window, thereby improving the user's visual effect.

At S460, when it is detected that the triggering operation of the preview window and/or the effect display interface satisfies a returning condition, it is retumed to the main interface to display the captured image or the target effect image, and display a default interface of at least one thumbnail on the effect display interface different from the main interface.

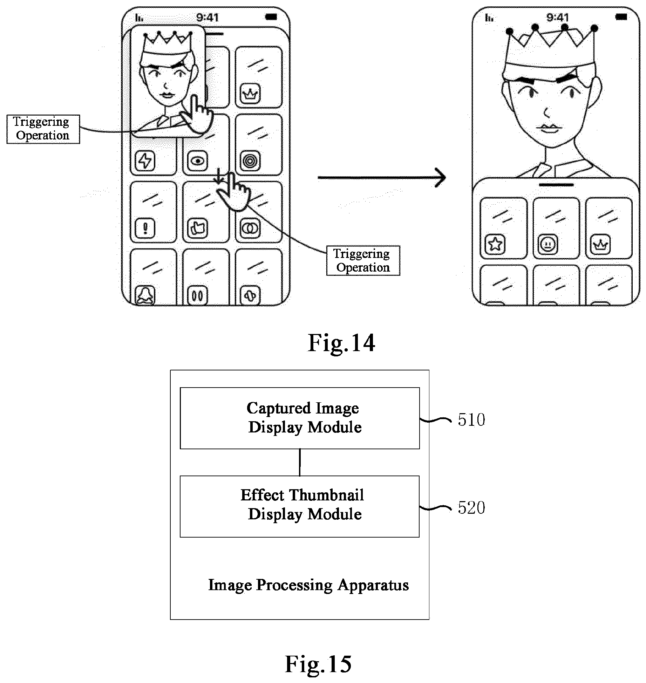

In the present embodiment, referring to FIG. 3, the default page is an interface that initially displays at least one thumbnail on the user's screen. The returning condition is a preset specified condition, and the returning condition can be sliding the preview window and/or the effect display interface downward, and when the sliding direction or sliding speed satisfies a certain condition, it is returned to the default interface. Or it can be returned to the default interface by double-clicking the device screen. Exemplarily, referring to FIG. 14, the user can return to the default interface by quickly sliding on the device screen downward. The advantage of this setting is that when the user wants to exit the current page, he can quickly and conveniently return to the default interface.

In an embodiment of the present disclosure, when it is detected that the image processing condition is satisfied, the captured image is displayed on the main interface; and at least one effect thumbnail is displayed on the effect display interface different from the main interface; when it is detected that the triggering operation on the effect display interface satisfies the preset condition, the display dimension of the effect display interface tiled on the main interface is adjusted to display multiple effect thumbnails on the effect display interface, and when a display ratio between the display dimension and an interface dimension of the main interface reaches a preset display ratio, a preview window corresponding to the main interface is popped up to display the captured image or the target effect image corresponding to the captured image in the preview window; when it is detected that the preview window is dragged, the display position of the preview window on the effect display interface is adjusted based on the dragging trajectory; and when it is detected that the triggering operation on the preview window and/or the effect display interface satisfies the fallback condition, it is returned to the main interface to display the captured captured image or the target effect image, and display at least one thumbnail on the effect display interface different from the main interface, which realizes that the user can adjust the position and display area of the effect display interface and the preview window according to their own needs, thereby improving the user's visual effect and the adaptability of the application.

FIG15 is a schematic diagram of the structure of an image processing apparatus provided by an embodiment of the present disclosure. As shown in FIG. 15, the apparatus includes: an captured image display module 510 and an effect thumbnail display module 520.

The captured image display module 510 is configured to display the captured image on the main interface when it is detected that the image processing condition is satisfied;
the effect thumbnail display module 520 is configured to display at least one effect thumbnail on an effect display interface different from the main interface;
wherein the effect thumbnail includes an effect icon and an effect cover corresponding to the effect icon.

Based on the above embodiments, the apparatus further includes: a target effect determination module and a target effect image display module.

The effect thumbnail determination module is configured to determine the target effect based on a triggering operation of at least one effect thumbnail.

The target effect image display module is configured to perform an effect processing on the image to be processed, obtain target effect image corresponding to the target effect, and display them on the main interface;
wherein the display effect of the target effect image corresponds to the display effect of the effect cover of the target effect.

On the basis of the above embodiments, the apparatus further includes: an effect cover determination module and an effect thumbnail generation module.

The effect cover determination module is configured to determine the effect cover corresponding to each effect icon; wherein the effect cover includes a static cover image or a dynamic cover image; and
the effect thumbnail generation module is configured to generate an effect thumbnail based on the effect icon and the corresponding effect cover.

On the basis of the above embodiments, the effect cover determination module includes: an effect attribute acquisition sub-module, a target effect determination sub-module and an effect cover determination sub-module.

The effect attribute acquisition sub-module is configured to, for each effect icon, acquire a historical effect video associated with the current effect icon and a corresponding effect attribute;
the target effect determination sub-module is configured to determine a target historical effect video from the historical effect video based on the effect attribute; and
the effect cover determination sub-module is configured to determine an effect cover of the current effect icon based on the target historical effect video.

On the basis of the above embodiments, the effect cover determination sub-module includes a video frame determination unit, which is configured to determine one or more video frames from the target historical effect video as the effect cover of the current effect icon.

On the basis of the above embodiments, the effect cover determination module includes an effect cover determination sub-unit, which is configured to determine the effect cover corresponding to the effect icon based on the effect creation video corresponding to the effect icon uploaded by the target user.

On the basis of the above embodiments, the apparatus also includes: a display interface adjustment module, which is configured to adjust the display dimension of the effect display interface tiled on the main interface when it is detected that the triggering operation on the effect display interface satisfies the preset condition, so as to display multiple effect thumbnails on the effect display interface.

On the basis of the above embodiments, the display interface adjustment module further includes: a preview window pop-up sub-module, which is configured to pop up a preview window corresponding to the main interface when a display ratio between the display dimension and an interface dimension of the main interface reaches a preset display ratio, so as to display the captured image or the target effect image corresponding to the captured image in the preview window, wherein the window dimension of the preview window is smaller than the display dimension.

On the basis of the above embodiments, the preview window pop-up sub-module further includes: a display position adjustment unit, a window dimension adjustment unit and a main interface returning unit.

The display position adjustment unit is configured to adjust the display position of the preview window on the effect display interface based on the dragging trajectory when it is detected that the preview window is dragged.

The window size adjustment unit is configured to adjust the window dimension of the preview window on the effect display interface when a two-finger zoom-in or two-finger zoom-out operation is detected to be triggered in the preview window.

The main interface returning unit is configured to return to the main interface to display the captured image or the target effect image when it is detected that the triggering operation of the preview window and/or the effect display interface satisfies the return condition, and to display at least one thumbnail on the effect display interface different from the main interface.

In an embodiment of the present disclosure, when it is detected that the image processing condition is satisfied, the captured image is displayed on the main interface; and at least one effect thumbnail is displayed on the effect display interface different from the main interface; wherein the effect thumbnail includes an effect icon and an effect cover corresponding to the effect icon, thereby improving a situation in the related art that the user cannot intuitively browse the display effect of the effect and the cost for the user to understand the effect is high. By optimizing the contents on the effect thumbnail, more information is provided, thereby improving the user's understanding of the effect contents.

The image processing apparatus provided in an embodiment of the present disclosure can execute the image processing method provided in any embodiment of the present disclosure, and has the corresponding functional modules and beneficial effects for executing the method.

It is noted that the various units and modules included in the above apparatus are only divided according to functional logic, but are not limited to the above division, as long as the corresponding functions can be realized; and in addition, the names of the functional units are only for the convenience of distinguishing each other, and are not used to limit the protection scope of the embodiment of the present disclosure.

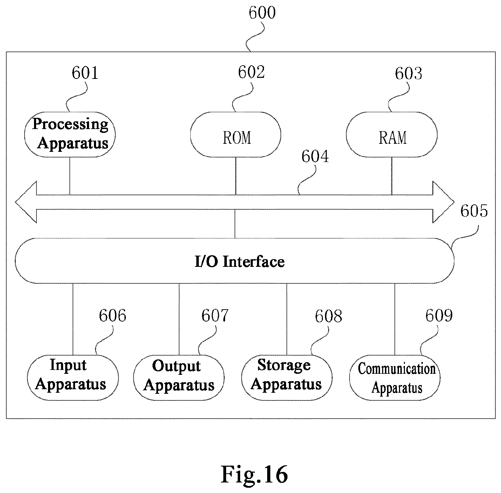

FIG. 16 is a structural schematic diagram of an electronic device provided in the embodiment of the present disclosure. Referring to FIG. 16 below, it shows a schematic diagram of a structure of an electronic device (such as a terminal device or server in FIG. 16) 600 suitable for implementing an embodiment of the present disclosure. The terminal device in an embodiment of the present disclosure may include but is not limited to mobile terminals such as a mobile phone, a laptop, a digital broadcast receiver, a Personal Digital Assistant (PDA), a tablet computer (PAD), a Portable Media Player (PMP), a vehicle terminal (such as a vehicle navigation terminal), etc., and fixed terminals such as a digital television (Television, TV), a desktop computer, etc. The electronic device shown in FIG. 16 is only an example and should not bring any limitations to the functions and scope of use of the embodiment of the present disclosure.

As shown in FIG. 16, the electronic device 600 may include a processing apparatus (e.g., a central processing unit, a graphics processing unit, etc.) 601, which may perform various appropriate actions and processes according to a program stored in a read-only memory (ROM) 602 or a program loaded from a storage device 608 to a random access memory (RAM) 603. Various programs and data required for the operation of the electronic device 600 are also stored in the RAM 603. The processing apparatus 601, the ROM 602, and the RAM 603 are connected to each other via a bus 604. An input/output (I/O) interface 605 is also connected to the bus 604.

Typically, the following apparatus may be connected to the I/O interface 605: an input apparatus 606 including, for example, a touch screen, a touchpad, a keyboard, a mouse, a camera, a microphone, an accelerometer, a gyroscope, etc.; an output apparatus 607 including, for example, a Liquid Crystal Display (LCD), a speaker, a vibrator, etc.; a storage device 608 including, for example, a magnetic tape, a hard disk, etc.; and a communication apparatus 609. The communication device 609 can allow the electronic device 600 to communicate with other devices wirelessly or by wire to exchange data. Although FIG. 16 shows an electronic device 600 with various apparatus, it should be understood that it is not required to implement or have all the apparatus shown. More or fewer apparatus may be implemented or have alternatively.

In particular, according to an embodiment of the present disclosure, the process described above with reference to the flowchart can be implemented as a computer software program. For example, an embodiment of the present disclosure includes a computer program product, which includes a computer program carried on a non-transitory computer-readable medium, and the computer program contains program codes for executing the method shown in the flowchart. In such an embodiment, the computer program can be downloaded and installed from a network through a communication apparatus 609, or installed from a storage apparatus 608, or installed from a ROM 602. When the computer program is executed by the processing apparatus 601, the above functions defined in the method of an embodiment of the present disclosure are executed.

The names of the messages or information exchanged between multiple apparatus in an embodiment of the present disclosure are only for illustrative purposes, and are not used to limit the scope of these messages or information.

The electronic device provided in an embodiment of the present disclosure and the image processing method provided in the above embodiments belong to the same inventive concept, the technical details not described in detail in the present embodiment can be referred to as the above embodiment, and the present embodiment has the same beneficial effects as the above embodiments.

An embodiment of the present disclosure provides a computer storage medium, on which a computer program is stored, and the program implements the image processing method provided in the above embodiment when executed by a processor.

It should be noted that the computer-readable medium mentioned above in the present disclosure may be a computer-readable signal medium or a computer-readable storage medium or any combination of the above two. The computer-readable storage medium may be, for example, but not limited to, an electrical, magnetic, optical, electromagnetic, infrared, or semiconductor system, apparatus or device, or any combination of the above. Examples of computer-readable storage media may include, but are not limited to: an electrical connection with one or more wires, a portable computer disk, a hard disk, a random access memory (RAM), a read-only memory (ROM), an Erasable Programmable Read-Only Memory (EPROM) or flash memory, an optical fiber, a portable Compact Disc Read-Only memory (CD-ROM), an optical storage device, a magnetic storage device, or any suitable combination of the above. In the present disclosure, a computer-readable storage medium may be any tangible medium containing or storing a program, which may be used by or in combination with an instruction execution system, device or device. In the present disclosure, the computer-readable signal medium may include a data signal propagated in a baseband or as part of a carrier wave, in which computer-readable program codes are carried. Such propagated data signals may take a variety of forms, including but not limited to electromagnetic signals, optical signals, or any suitable combination of the above. Computer-readable signal media may also be any computer-readable medium other than computer-readable storage media, which may send, propagate, or transmit programs for use by or in conjunction with an instruction execution system, apparatus, or device. The program codes contained on the computer-readable medium may be transmitted using any appropriate medium, including but not limited to: wires, optical cables, radio frequencies (RF), etc., or any suitable combination of the above.

In some implementations, the client and the server may communicate using any currently known or future developed network protocol such as HTTP (HyperText Transfer Protocol), and may be interconnected with any form or medium of digital data communication (e.g., communication network). Examples of communication networks include Local Area Networks (LAN), Wide Area Networks (WAN), internets (e.g., the Internet), and peer-to-peer networks (e.g., ad hoc peer-to-peer networks), as well as any currently known or future developed networks.

The above-mentioned computer-readable medium may be contained in the above electronic device; or it may exist separately without being assembled into the electronic device.

The above computer-readable medium carries one or more programs, and when the above one or more programs are executed by the electronic device, the electronic device is caused to:
display the captured image on the main interface when it is detected that the image processing condition is satisfied; and
display at least one effect thumbnail on an effect display interface different from the main interface;
wherein the effect thumbnail includes an effect icon and an effect cover corresponding to the effect icon.

Alternatively, the computer-readable medium carries one or more programs, and when the one or more programs are executed by the electronic device, the electronic device is caused to:
display the captured image on the main interface when it is detected that the image processing condition is satisfied; and
display at least one effect thumbnail on an effect display interface different from the main interface;
wherein the effect thumbnail includes an effect icon and an effect cover corresponding to the effect icon.

The computer program codes for performing the operations of the present disclosure can be written in one or more programming languages or a combination thereof, and the above programming languages include but are not limited to object-oriented programming languages-such as Java, Smalltalk, C++, and conventional procedural programming languages-such as "C" language or similar programming languages. The program codes can be executed completely on the user's computer, executed partially on the user's computer, executed as an independent software package, executed partially on the user's computer and partially on a remote computer, or executed completely on a remote computer or server. In cases involving a remote computer, the remote computer may be connected to the user's computer through any type of network, including a local area network (LAN) or a wide area network (WAN), or may be connected to an external computer (e.g., through the Internet using an Internet service provider).

The flowcharts and block diagrams in the accompanying drawings illustrate the possible architecture, functions and operations of the systems, methods and computer program products according to various embodiments of the present disclosure. In this regard, each box in the flowcharts or block diagrams may represent a module, a program segment, or a portion of codes, which contains one or more executable instructions for implementing the specified logical functions. It should also be noted that in some alternative implementations, the functions marked in the box may also occur in a different order than that marked in the accompanying drawings. For example, two boxes represented in succession can actually be executed substantially in parallel, and they can sometimes be executed in the opposite order, depending on the functions involved. It should also be noted that each box in the block diagram and/or flowchart, and the combination of boxes in the block diagram and/or flowchart, can be implemented with a dedicated hardware-based system that performs the specified functions or operations, or can be implemented with a combination of dedicated hardware and computer instructions.

The units involved in the embodiments described in the present disclosure can be implemented in software or in hardware. Herein, the names of the units do not constitute a limitation on the units itself in some cases. For example, the first acquisition unit can also be described as a "unit for acquiring at least two Internet Protocol addresses".

The functions described above herein can be performed at least partially by one or more hardware logic components. For example, without limitation, exemplary types of hardware logic components that can be used include: a Field Programmable Gate Array (FPGA), an Application Specific Integrated Circuit (ASIC), an Application Specific Standard Product (ASSP), a System on Chip (SOC), a Complex Programmable Logic Device (CPLD), etc.

In the context of the present disclosure, the machine-readable medium can be a tangible medium that can contain or store a program for use by an instruction execution system, apparatus or device or used in conjunction with an instruction execution system, apparatus or device. The machine-readable medium can be a machine-readable signal medium or a machine-readable storage medium. The machine-readable medium can include, but is not limited to, electronic, magnetic, optical, electromagnetic, infrared, or semiconductor systems, apparatus or devices, or any suitable combination of the above. Examples of machine-readable storage media may include electrical connections based on one or more wires, portable computer disks, hard disks, random access memory (RAM), read-only memory (ROM), erasable programmable read-only memory (EPROM) or flash memory, optical fibers, portable compact disk read-only memory (CD-ROM), optical storage devices, magnetic storage devices, or any suitable combination of the above.

According to one or more embodiments of the present disclosure, [Example 1] provides an image processing method, which includes:
displaying a captured image on a main interface when it is detected that an image processing condition is satisfied; and
displaying at least one effect thumbnail on an effect display interface different from the main interface;
wherein, the effect thumbnail includes an effect icon and an effect cover corresponding to the effect icon.

According to one or more embodiments of the present disclosure, [Example 2] provides an image processing method, which also includes:
determining a target effect based on a triggering operation on the at least one effect thumbnail;
performing an effect processing on the captured image to obtain target effect image corresponding to the target effect, and displaying them on the main interface;
wherein the display effect of the target effect image corresponds to a display effect of the effect cover of the target effect.

According to one or more embodiments of the present disclosure, [Example 3] provides an image processing method, which also includes:
optionally, determining the effect cover corresponding to each effect icon; wherein the effect cover includes a static cover image or a dynamic cover image; and
generating an effect thumbnail based on the effect icon and the corresponding effect cover.

According to one or more embodiments of the present disclosure, [Example 4] provides an image processing method, which also includes:
optionally, for each effect icon, acquiring a historical effect video associated with the current effect icon and a corresponding effect attribute;
determining a target historical effect video from the historical effect video based on the effect attribute; and
determining an effect cover of the current effect icon based on the target historical effect video.

According to one or more embodiments of the present disclosure, [Example 5] provides an image processing method, which also includes:
optionally, determining one or more video frames from the target historical effect video as the effect cover of the current effect icon.

According to one or more embodiments of the present disclosure, [Example 6] provides an image processing method, which also includes:
determining an effect cover corresponding to the effect icon based on the effect creation video corresponding to the effect icon uploaded by the target user.

According to one or more embodiments of the present disclosure, [Example 7] provides an image processing method, which also includes:
adjusting a display dimension of the effect display interface tiled on the main interface to display multiple effect thumbnails on the effect display interface when it is detected that the triggering operation on the effect display interface satisfies the preset condition.

According to one or more embodiments of the present disclosure, [Example 8] provides an image processing method, which also includes:
optionally, popping up a preview window corresponding to the main interface to display the captured image or the target effect image corresponding to the captured image in the preview window when a display ratio between the display dimension and an interface dimension of the main interface reaches a preset display ratio;
wherein the window dimension of the preview window is smaller than the display dimension.

According to one or more embodiments of the present disclosure, [Example 9] provides an image processing method, which also includes:
optionally, adjusting a display position of the preview window on the effect display interface based on a dragging trajectory when it is detected that the preview window is dragged.

According to one or more embodiments of the present disclosure, [Example 10] provides an image processing method, which also includes:
optionally, adjusting a window dimension of the preview window on the effect display interface when it is detected that a two-finger zoom-in or two-finger zoom-out operation is triggered in the preview window.

According to one or more embodiments of the present disclosure, [Example 11] provides an image processing method, which also includes:
optionally, returning to the main interface to display the captured image or the target effect image, and displaying a default interface of at least one thumbnail on the effect display interface different from the main interface when it is detected that the triggering operation of the preview window and/or the effect display interface satisfies a returning condition.

According to one or more embodiments of the present disclosure, [Example 12] provides an image processing apparatus, which includes:
a captured image display module, which is configured to display the captured image on the main interface when it is detected that an image processing condition is satisfied; and
an effect thumbnail display module, which is configured to display at least one effect thumbnail on an effect display interface different from the main interface;
wherein the effect thumbnail includes an effect icon and an effect cover corresponding to the effect icon.

Those skilled in the art should understand that the disclosure scope involved in the present disclosure is not limited to the embodiments formed by a specific combination of the above technical features, but should also cover other embodiments formed by any combination of the above technical features or their equivalent features without departing from the above disclosure concept, such as embodiments that are formed by replacing the above features with the technical features disclosed in the present disclosure (but not limited to) with similar functions.

In addition, although the operations are depicted in a specific order, this should not be understood as requiring these operations to be performed in the specific order shown or in a sequential order. In certain environments, multitasking and parallel processing may be advantageous. Likewise, while several implementation details are included in the above discussion, these should not be construed as limitations on the scope of the present disclosure. Certain features described in the context of separate embodiments may also be implemented in combination in a single embodiment. Conversely, various features described in the context of a single embodiment may also be implemented in multiple embodiments individually or in any suitable subcombination.

Although the subject matter has been described in language specific to structural features and/or methodological logical actions, it should be understood that the subject matter defined in the appended claims is not necessarily limited to the specific features or actions described above. Instead, the specific features and actions described above are merely example forms of implementing the claims.

## Claims

1. An image processing method, comprising:
in response to detecting that an image processing condition is satisfied, displaying a captured image on a main interface; and
displaying at least one effect thumbnail on an effect display interface different from the main interface,
wherein each effect thumbnail includes an effect icon and an effect cover corresponding to the effect icon.

2. The method according to claim 1, further comprising:
determining a target effect based on a triggering operation on the at least one effect thumbnail;
performing an effect processing on the captured image to obtain a target effect image corresponding to the target effect, and display the target effect image on the main interface,
wherein a display effect of the target effect image corresponds to a display effect of the effect cover of the target effect.

3. The method according to claim 1, further comprising:
determining an effect cover corresponding to each effect icon, wherein the effect cover includes a static cover image or a dynamic cover image; and
generating the effect thumbnail based on each effect icon and a corresponding effect cover.

4. The method according to claim 3, wherein the determining of the effect cover corresponding to each effect icon comprises:
for each effect icon, acquiring a historical effect video associated with a current effect icon and a corresponding effect attribute;
determining, based on the effect attribute, a target historical effect video from the historical effect video; and
determining, based on the target historical effect video, an effect cover of the current effect icon.

5. The method according to claim 4, wherein the determining of the effect cover of the current effect icon based on the target historical effect video comprises:
determining one or more video frames from the target historical effect video as the effect cover of the current effect icon.

6. The method according to claim 3, wherein the determining of the effect cover corresponding to each effect icon comprises:
determining, based on an effect creation video corresponding to the effect icon uploaded by a target user, the effect cover corresponding to the effect icon.

7. The method according to claim 1, further comprising:
in response to detecting that a triggering operation on the effect display interface satisfies a preset condition, adjusting a display dimension of the effect display interface tiled on the main interface, to display multiple effect thumbnails on the effect display interface.

8. The method according to claim 7, further comprising:
in response to a display ratio between the display dimension and an interface dimension of the main interface reaching a preset display ratio, popping up a preview window corresponding to the main interface, to display the captured image or the target effect image corresponding to the captured image in the preview window,
wherein a window dimension of the preview window is smaller than the display dimension

9. The method according to claim 8, further comprising:
in response to detecting that the preview window is dragged, adjusting a display position of the preview window on the effect display interface based on a dragging trajectory.

10. The method according to claim 8, further comprising:
in response to detecting that a two-finger zoom-in or two-finger zoom-out operation is triggered in the preview window, adjusting the window dimension of the preview window on the effect display interface.

11. The method according to claim 8, further comprising:
in response to detecting that a triggering operation on at least one of the preview window or the effect display interface satisfies a returning condition, returning to the main interface to display the captured image or the target effect image, and display a default interface of at least one thumbnail on the effect display interface different from the main interface.

12. An image processing apparatus, comprising:
an captured image display module, configured to display a captured image on a main interface in response to detecting that an image processing condition is satisfied; and
an effect thumbnail display module, configured to display at least one effect thumbnail on an effect display interface different from the main interface,
wherein each effect thumbnail comprises an effect icon and an effect cover corresponding to the effect icon.

13. An electronic device, comprising:
one or more processors;
a storage device, which is configured to store one or more programs,
when the one or more programs are executed by the one or more processors, the one or more processors are caused to implement the image processing method according to any one of claims 1-11.

14. A storage medium comprising computer executable instructions that, when executed by a computer processor, are used to perform the image processing method according to any one of claims 1 to 11.
